# EUROPÄISCHE PATENTSCHRIFT

(11) **EP 3 414 638 B1**
(45) Veröffentlichungstag und Bekanntmachung des Hinweises auf die Patenterteilung: **17.07.2024**
(21) Anmeldenummer: 17710716.6
(22) Anmeldetag: 10.03.2017
(51) Int. Cl.: G05B 19/418

(54) **SYSTEM UND VERFAHREN ZUR PRODUKTIONSPLANUNG**
PRODUCTION PLANNING SYSTEM AND METHOD
SYSTÈME ET PROCÉDÉ DE PLANIFICATION DE LA PRODUCTION

(30) Priorität: 16.03.2016 DE 102016204392
(43) Veröffentlichungstag der Anmeldung: 19.12.2018
(73) Patentinhaber: TRUMPF Werkzeugmaschinen SE + Co. KG, 71254 Ditzingen (DE)
(72) Erfinder: FISCHER, Stephan, 76227 Karlsruhe (DE)
(74) Vertreter: Trumpf Patentabteilung
(86) Internationale Anmeldenummer: PCT/EP2017/055749
(87) Internationale Veröffentlichungsnummer: WO 2017/157809

(56) Entgegenhaltungen:
- EP-A1- 1 693 729
- EP-A2- 2 703 922
- WO-A1-2015/167491
- US-B1- 7 085 614

## Beschreibung

Die Erfindung betrifft ein System und ein Verfahren zur Produktionsplanung, und betrifft insbesondere ein solches System und Verfahren zur Produktionsplanung unter Berücksichtigung des Zustandes der Produktionsmittel.

Moderne Produktionsumgebungen bestehen aus einer Vielzahl heterogener, häufig redundanter Produktionsmittel. Diese Produktionsmittel werden aus Maschinen gebildet, wobei in diesem Patent unter Maschinen sämtliche Bearbeitungsanlagen, beispielsweise zur Laserbearbeitung, zum Stanzen oder Biegen, und Geräte wie beispielsweise Laserstrahlquellen, Plasma- oder Induktionsgeneratoren, zusammengefasst sind.

Ein spezifisches Produkt kann zu seiner Herstellung mehrere Bearbeitungsschritte gegebenenfalls an mehreren Stationen bzw. Maschinen durchlaufen müssen, wobei häufig für einen konkreten Bearbeitungsschritt mehrere Maschinen zur Verfügung stehen. Hierbei können die Bearbeitungsschritte in zeitlicher Abhängigkeit zueinander stehen.

Beispielsweise können bei Herstellung eines Produktes, dass aus zwei Bauteilen zusammengefügt ist, die Bearbeitungsschritte anfallen, aus einem Blech einen ersten Blechrohling auszuschneiden, diesen anschließend in seine Endform zu biegen, einen zweiten Blechrohling auszuschneiden, diesen anschließend in seine Endform zu biegen, den ersten Blechrohling und den zweiten Blechrohling zusammenzufügen und anschließend zu lackieren. Hierbei bestehen insoweit zeitliche Abhängigkeiten, dass das Ausschneiden der beiden Blechrohlinge jeweils vor deren Biegen erfolgen muss, das Zusammenfügen der Blechrohlinge nach deren Fertigstellung erfolgen muss und das Lackieren nach dem Zusammenfügen erfolgen muss. Die jeweilige Herstellung und Bearbeitung der beiden Blechrohlinge hingegen kann unabhängig voneinander erfolgen, sodass beispielsweise zuerst das Ausschneiden des ersten Blechrohlings, dann das Ausschneiden des zweiten Blechrohlings, dann das Biegen des ersten und dann das Biegen des zweiten Blechrohlings erfolgen kann. Stehen zur Ausführung der jeweiligen Bearbeitungsschritte in der Produktionsumgebung mehrere Maschinen zur Verfügung, können einer oder mehrere der Schritte zur Herstellung der Blechrohlinge parallel erfolgen. Je nach Komplexität des Blechrohlings und der Beschaffenheit der Schneidemaschine kann es von Vorteil sein, beide Bauteile an einer Schneidemaschine nacheinander aus einem Blech zu schneiden, was nur einen Einspannvorgang und ggf. einen Werkzeugwechsel erfordert, oder parallel an zwei Schneidemaschinen aus zwei Blechen zu schneiden, was bei komplexen und langen Schneidevorgängen die Bearbeitungszeit halbieren kann.

Selbst bei einfachen Produktionsabläufen wie oben kann der Planungsaufwand unter Berücksichtigung von vorgegebenen Produktionsendfristen, hohen Stückzahlen und Maschinenausfällen schnell eine hohe Komplexität erreichen, die unter Hinzunahme weiterer Bearbeitungsschritte, Bauteile und Produkte exponentiell wächst. Die Produktionsplanung wird in der Regel rechnergestützt durchgeführt. Hierbei kann es sich um eine Grobplanung aus einem Warenwirtschaftssystem handeln, dass nur eine ungenaue Planung der Produktionsmittel und Fristen erlaubt, oder um eine Feinplanung, bei der unter Berücksichtigung von Konstruktionsplänen Bearbeitungsdauern ermittelt und verwendet werden.

Im Stand der Technik ist bekannt, zur Steuerung von Produktionsabläufen in mehrteiligen Produktionsprozessen deterministische endliche Automaten oder neuronale Netze zur Modellierung oder Steuerung der Arbeitsschritte zu verwenden. Endliche Automaten bzw. Zustandsautomaten sind dem Fachmann beispielsweise bekannt aus John E. Hopcroft, Jeffrey Ullman, "Einführung in die Automatentheorie, formale Sprachen und Komplexitätstheorie", 2. Auflage, 1990 Addison-Wesley, dessen Inhalt hier umfassend aufgenommen ist. Neuronale Netze sind dem Fachmann beispielsweise bekannt aus Günter Daniel Rey, Karl F. Wender, "Neuronale Netze", 2. Auflage, 2010, Huber, dessen Inhalt hier vollumfassend aufgenommen ist.

EP 2 703 922 A2 beschreibt ein Verfahren zur dynamischen Kontrolle von Aufgabenzuweisungen in einem Herstellungsprozess.

So beschreibt beispielsweise WO2008030637 die Verwendung endlicher Automaten und neuronaler Netze zur Steuerung und zur Prozessmodellierung bei der Wafer-Handhabung in einer Halbleiterfertigungsumgebung. Diese Druckschrift beschreibt ein Halbleiterverarbeitungssystem mit einer Wafer-Handhabungshardware.

Bei der Produktionsplanung im Stand der Technik wird die Planung entkoppelt von der tatsächlichen Produktion durchgeführt.

Hierbei ist nachteilhaft, dass die Produktionsplanung den aktuellen Betriebsmittelzustand nur unzureichend berücksichtigen kann. Zwar ist es - falls entsprechende Information für die Produktionsplanung verfügbar sind - möglich, beim Planungsvorgang den aktuellen Betriebsmittelzustand zu berücksichtigen. Nach Abschluss des Planungsvorgangs hingegen werden Änderungen des Betriebsmittelzustands, beispielsweise der Ausfall einer bestimmten Werkzeugmaschine, nicht mehr berücksichtigt. Auch reagiert die bekannte Produktionsplanung unflexibel auf Ad-hoc-Aufträge, die in eine bereits bestehende Produktionsplanung integriert werden müssen.

Es ist Aufgabe der Erfindung, die aus dem Stand der Technik bekannten Nachteile zu beseitigen und insbesondere ein System und ein Verfahren bereitzustellen, die ermöglichen, aktuelle Betriebsmittelzustände bei der Produktionsplanung zu berücksichtigen.

Diese Aufgabe wird gelöst durch ein System nach Anspruch 1 und ein Verfahren nach Anspruch 9.

Weitere vorteilhafte Ausgestaltungen sind Gegenstand der Unteransprüche.

Offenbart wird ein Produktionsoptimierungssystem, das aufweist: eine Produktionsumgebung mit mindestens einer ersten Maschine und einer zweiten Maschine, eine Verteileinheit, die eingerichtet ist, mit der ersten Maschine und der zweiten Maschine über ein Kommunikationsnetz verbunden zu sein und deren Maschinenzustand zu ermitteln, und eine Optimiereinheit, die eingerichtet ist, einen Produktionsplan zu erstellen, in dem mindestens ein Auftrag zur Herstellung eines Produktes in maschinenspezifische Unteraufträge für die erste Maschine oder die zweite Maschine aufgeteilt und für die erste Maschine oder die zweite Maschine mit einer Reihenfolge vorgesehen werden, wobei die Verteileinheit eingerichtet ist, unter Berücksichtigung des jeweiligen Maschinenzustands den nächsten anstehenden Unterauftrag für die erste Maschine oder die zweite Maschine von der Optimiereinheit zu ermitteln, aus der Produktionsplanung zu entfernen und der jeweiligen Maschine zuzuweisen.

Offenbart wird ferner ein Optimierverfahren, ausgeführt durch eine Optimiereinheit, das die Schritte aufweist: Modellieren einer Produktionsumgebung mit mindestens einer Maschine, Empfangen mindestens eines Auftrags zur Herstellung eines Produkts, Erstellen von Unteraufträgen aus dem einen Auftrag als Arbeitsschritte für mindestens eine Maschine, Zuweisen der Unteraufträge an die mindestens eine Maschine als Produktionsplan nach Empfangen eines Auftrags oder nach Entnahme eines Unterauftrags durch eine Verteileinheit oder nach Ablauf einer vorbestimmten Zeitspanne nach der letzten Entnahme eines Unterauftrags durch die Verteileinheit.

Über dies wird ein Verteilverfahren, ausgeführt durch eine Verteileinheit (120), offenbart, das die Schritte aufweist: Ermitteln des Zustandes mindestens einer Maschine aus einer Produktionsumgebung, Ermitteln, ob die Produktionsplanung einer Optimiereinheit einen weiteren Unterauftrag für die Maschine vorsieht, Entnehmen des Unterauftrags aus der Produktionsplanung der Optimiereinheit unter Berücksichtigung des ermittelten Zustands der Maschine, wenn die Produktionsplanung einen weiteren Unterauftrag für die Maschine vorsieht.

Die Erfindung offenbart eine Trennung zwischen der Optimiereinheit und der Verteileinheit. Hierdurch erfolgt eine kontinuierliche Produktionsmittelüberwachung und eine kontinuierliche Produktionsplanung, die es ermöglicht, bei Betriebsmittelzustandsänderungen die Planung an den geänderten Zustand unmittelbar anzupassen.

Die Erfindung wird durch die Ansprüche definiert. Weitere Vorteile und vorteilhafte Ausgestaltungen des Gegenstands der Erfindung sind der Beschreibung und den Zeichnungen entnehmbar

Im Folgenden wird ein Ausführungsbeispiel der Erfindung anhand der Figuren beschrieben.
Figur 1 zeigt ein Ausführungsbeispiel eines erfindungsgemäßen Produktionsplanungssystems.
Figur 2 zeigt ein Ablaufdiagramm eines Optimierungsprozesses des Ausführungsbeispiels.
Figur 3 zeigt ein Ablaufdiagramm eines Verteilungsprozesses des Ausführungsbeispiels.
Figur 4 zeigt ein Ablaufdiagramm eines Optimierungsprozesses eines abgewandelten Ausführungsbeispiels.
Figur 5 zeigt ein Ablaufdiagramm eines Verteilungsprozesses eines abgewandelten Ausführungsbeispiels.

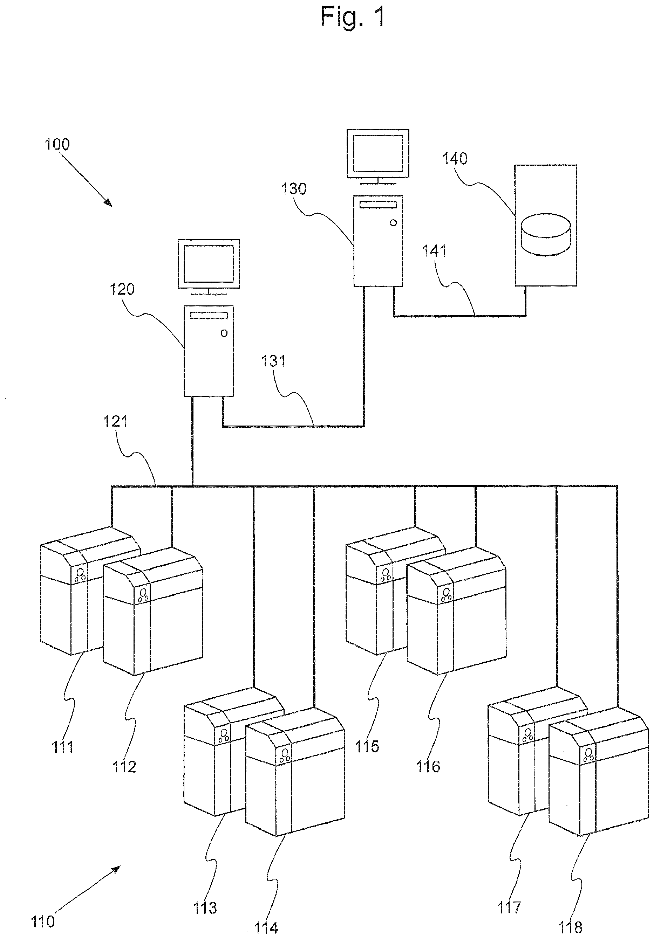

Anhand von Figur 1 wird ein Ausführungsbeispiel eines erfindungsgemäßen Systems zur Produktionsplanung beschrieben.

Das erfindungsgemäße Produktionsplanungssystem 100 weist eine Produktionsumgebung 110 auf. Die Produktionsumgebung 110 umfasst mindestens eine, meist jedoch mehrere Produktionsmittel in Form von Maschinen 111 - 118 auf. Maschinen im Sinne dieses Patents sind alle Vorrichtungen zur Herstellung oder Bearbeitung von Produkten oder einzelner Bauteile von Produkten, wie Bearbeitungsanlagen zur Laserbearbeitung, zum Stanzen oder Biegen, und Geräte wie beispielsweise Laserstrahlquellen, Plasma- oder Induktionsgeneratoren. Im konkreten Ausführungsbeispiel handelt es sich um eine Produktionsumgebung zur Fertigung von zusammengesetzten Blechbauteilen. Hierfür weist die Produktionsumgebung 110 als Produktionsmittel eine erste Schneidemaschine 111 und eine zweite Schneidemaschine 112 auf, die mittels Laser Blechrohlinge aus einem Ausgangsblech schneiden können. Ferner weist die Produktionsumgebung 110 eine erste Biegemaschine 113 und eine zweite Biegemaschine 114 auf, die einen Blechrohling umformen können. Ferner weist die Produktionsumgebung einen ersten Schweißroboter 115 und einen zweiten Schweißroboter 116 auf, die zwei eingespannte Blechteile an vorher festgelegten Punkten mittels Punkt- oder Nahtschweißen zusammenfügt. Ferner verfügt die Produktionsumgebung 100 über eine erste Lackierkammer 117 und eine zweite Lackierkammer 118, in welcher Bleche, Blechrohlinge und zusammengesetzte Blechbauteile lackiert werden können.

Das erfindungsgemäße Produktionsplanungssystem 100 weist ferner eine Verteileinheit 120 auf. Bei der Verteileinheit 120 handelt es sich um eine Einheit, die die Funktion erfüllt, den aktuellen Betriebszustand aller Betriebsmittel zu erfassen, und insbesondere zu erfassen, ob ein Betriebsmittel betriebsbereit ist und in welchem Ausführungsstadium eines Auftrages sich das Betriebsmittel befindet. Im Ausführungsbeispiel handelt es sich bei der Verteileinheit 120 um eine elektronische Datenverarbeitungsvorrichtung, die mittels eines ersten Kommunikationsnetzes 121 mit den Produktionsmitteln 111-118 direkt oder mit Steuereinheiten der Produktionsmittel 111-118 verbunden ist. Über entsprechende Schnittstellen kann die Verteileinheit 120 Informationen über den Betriebszustand der Produktionsmittel anfordern. Hierbei überwacht die Verteileinheit permanent den Betriebszustand der Produktionsumgebung 110. Obwohl es sich im Ausführungsbeispiel bei der Verteileinheit 120 um eine eigenständige Datenverarbeitungsvorrichtung handelt, kann die Funktionalität auch durch eine entsprechende Maschinensteuerung eines Betriebsmittels oder durch eine Serverkomponente mit anderen Funktionalitäten ausgeführt werden.

Das erfindungsgemäße Produktionsplanungssystem weist ferner eine Optimiereinheit 130 auf. Bei der Optimiereinheit 130 handelt es sich um eine Einheit, die die Funktion erfüllt, eine Produktionsplanung durchzuführen. Im Ausführungsbeispiel ist die Optimiereinheit 130 eine elektronische Datenverarbeitungsvorrichtung, die mittels eines zweiten Kommunikationsnetzes 131 mit der Verteileinheit 120 verbunden ist, so dass Daten zwischen beiden Vorrichtungen ausgetauscht werden können. Obwohl es sich bei der Optimiereinheit 130 im Ausführungsbeispiel um eine eigenständige Datenverarbeitungsvorrichtung handelt, kann die Funktionalität auch durch eine Serverkomponente mit anderen Funktionalitäten ausgeführt werden. Insbesondere können die Funktionalitäten der Optimiereinheit 130 und der Verteileinheit 120 von einer gemeinsamen Vorrichtung ausgeführt werden. Das erste Kommunikationsnetz 121 und das zweite Kommunikationsnetz 131 können zwei unterschiedliche Kommunikationsnetze sein oder aber als gemeinsames Kommunikationsnetz ausgebildet sein.

Das erfindungsgemäße Produktionsplanungssystem 100 weist ferner eine Datenspeichereinheit 140 auf. Im Ausführungsbeispiel handelt es sich bei der Datenspeichereinheit 140 um eine elektronische Datenverarbeitungsvorrichtung, insbesondere einen Datenbankserver, der dazu geeignet und bestimmt ist, Daten zu Produktionsmitteln und Produktionsaufträgen zu speichern, beispielsweise in einem Warenwirtschaftssystem. Die Datenspeichervorrichtung 140 ist mittels eines dritten Kommunikationsnetzes 141 mit der Optimiereinheit 130 verbunden so dass Daten zwischen beiden Vorrichtungen ausgetauscht werden können. Obwohl es sich bei der Datenspeichereinheit 140 im Ausführungsbeispiel um eine eigenständige Datenverarbeitungsvorrichtung handelt, kann die Funktionalität auch durch andere Vorrichtung, insbesondere eine Serverkomponente mit anderen Funktionalitäten ausgeführt werden. Insbesondere können die Funktionalitäten Datenspeichereinheit 140, der Optimiereinheit 130 oder der Verteileinheit 120 von einer gemeinsamen Vorrichtung ausgeführt werden. Das erste Kommunikationsnetz 121, das zweite Kommunikationsnetz 131 und das dritte Kommunikationsnetz 141 können unterschiedliche Kommunikationsnetze sein oder aber als gemeinsames Kommunikationsnetz ausgebildet sein.

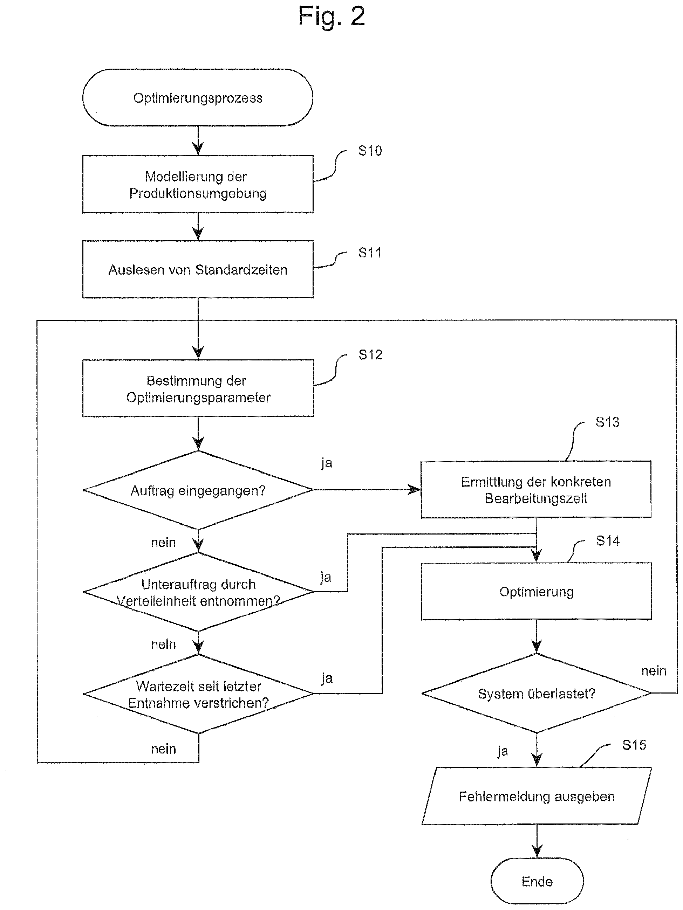

Unter Bezugnahme auf Fig. 2 wird ein erfindungsgemäßer Optimiereinheitsprozess beschrieben.

In einem Schritt S10 wird in der Optimiereinheit die Menge der Produktionsmittel als deterministischer endlicher Automat modelliert. Hierbei wird jedes Produktionsmittel durch die Schritte beschrieben, die bei der Fertigung eines Produktes durchlaufen werden müssen. Dies sind im Ausführungsbeispiel:
- Rüstschritt: die Ausstattung der Maschine mit einem geeigneten Werkzeug.
- Beladeschritt: das Beladen der Maschine mit Ausgangsmaterial oder einem Rohling.
- Bearbeitungsschritt: die Bearbeitung des Ausgangsmaterials oder des Rohlings.
- Entladeschritt: das Entladen der Maschine mit dem weiterverarbeiteten Rohling oder dem fertigen Produkt.
- Transportschritt: Transport des Rohlings zum nächsten Bearbeitungsschritt durch die nächste Maschine.

In einem Schritt S11 werden im Initialzustand die Arbeitsschritte mit Standardzeiten hinterlegt, die beispielsweise auf der Datenspeichereinheit 140 gespeichert sind.

Wird der Optimiereinheit 130 ein Auftrag, bestehend aus Art, Anzahl und Reihenfolge der zu erledigenden Arbeitsschritte und ggf. eines Auslieferungstermins der vollständigen Produktion bis zum Endprodukt der gesamten Stückzahl übermittelt, ermittelt die Optimiereinheit 130 in einem Schritt S13 zuerst eine Menge von Unteraufträgen für einzelne Arbeitsschritte für Arbeitsstationen und eine Näherung an den tatsächlich erforderlichen Zeitaufwand der zu erledigenden Arbeitsschritte. Hierbei greift die Optimiereinheit 130 beispielsweise auf der Datenspeichereinheit 140 hinterlegte Konstruktionspläne zurück und ermittelt beispielsweise anhand der Blechdicke und Schnittlängen einen für den konkreten Bearbeitungsschritt des Blechschnitts erforderliche Bearbeitungsdauer. Dort, wo eine konkrete Bearbeitungsdauer für einen Bearbeitungsschritt nicht ermittelbar ist, wird weiter die voreingestellte Standardzeit verwendet.

Durch die Optimiereinheit 130 wird dann in Schritt S14 in einem Optimiervorgang in bekannter Weise ein Produktionsplan erstellt und die einzelnen Arbeitsschritte als Unteraufträge in Arbeitswarteschlangen der Maschinen 111 - 118 einsortiert. Hierbei errechnet die Optimiereinheit 130 bei einem Optimiervorgang ein Gesamtoptimum des Systems, wobei voreingestellt werden kann und zuvor von der Optimiereinheit in Schritt S12 ermittelt wird, welche Parameter optimiert werden. Diese Parameter können beispielsweise sein:
- Minimierung des Rüstaufwands oder Be-/Entladeaufwands,
- Maximierung der Materialnutzung,
- Minimierung der Maschinenlaufzeit,
- Minimierung der Durchlaufzeit eines Produkts,
- Minimierung der Abarbeitungsdauer des Gesamtauftrags.

Im Falle einer Systemüberlastung, d.h. wenn die Optimiereinheit keinen Produktionsplan ermitteln kann, bei dem alle Aufträge innerhalb der geforderten Fertigstellungszeiten fertiggestellt werden können, wird in einem Schritt S15 einem Bediener eine Warnmeldung ausgegeben und der Optimiereinheitprozess beendet. Wird der Optimiervorgang erfolgreich abgeschlossen, kehrt der Optimiereinheitprozess zu Schritt S12 zurück.

Wird kein neuer Auftragseingang festgestellt und wird festgestellt, dass durch die Verteileinheit 120 ein Unterauftrag für eine der Maschinen entnommen und aus dem Vorrat an Unteraufträgen der Optimiereinheit entfernt wurde, wird mit Schritt S14 eine erneuter Optimiervorgang vorgenommen. Durch Abweichungen von der geplanten Bearbeitungsdauer zur tatsächlichen Bearbeitungsdauer kann sich nach der Entnahme des Unterauftrags eine geänderte Produktionsplanung als optimal erweisen.

Wird festgestellt, dass von der Verteileinheit 120 kein Unterauftrag aus der Optimiereinheit 130 entnommen wurde, und wird festgestellt, dass seit der letzten Entnahme eines Unterauftrags durch die Verteileinheit 120 eine voreingestellte Zeitdauer verstrichen ist, wird mit Schritt S14 ebenfalls ein erneuter Optimiervorgang vorgenommen. Durch den Ausfall einer Maschine 111-118 kann es vorkommen, dass die Warteschlange an Unteraufträgen für diese Maschine nicht abgearbeitet wird. Die noch vorhandene Restbearbeitungszeit bliebe bei diesen Aufträgen gleich, wohingegen sich die Fertigstellungsfrist immer weiter verkürzt. Bei einem erneuten Optimierungsvorgang würden diese Unteraufträge vorrangig vor weniger eilbedürftige Unteraufträge an inzwischen kürzeren Warteschlangen einsortiert.

Wird keine Zeitüberschreitung festgestellt, kehrt der Optimiereinheitprozess zu Schritt S12 zurück.

Auf diese Weise hält die Optimiereinheit zu jedem Zeitpunkt einen optimierten Produktionsplan für alle anstehenden Aufträge.

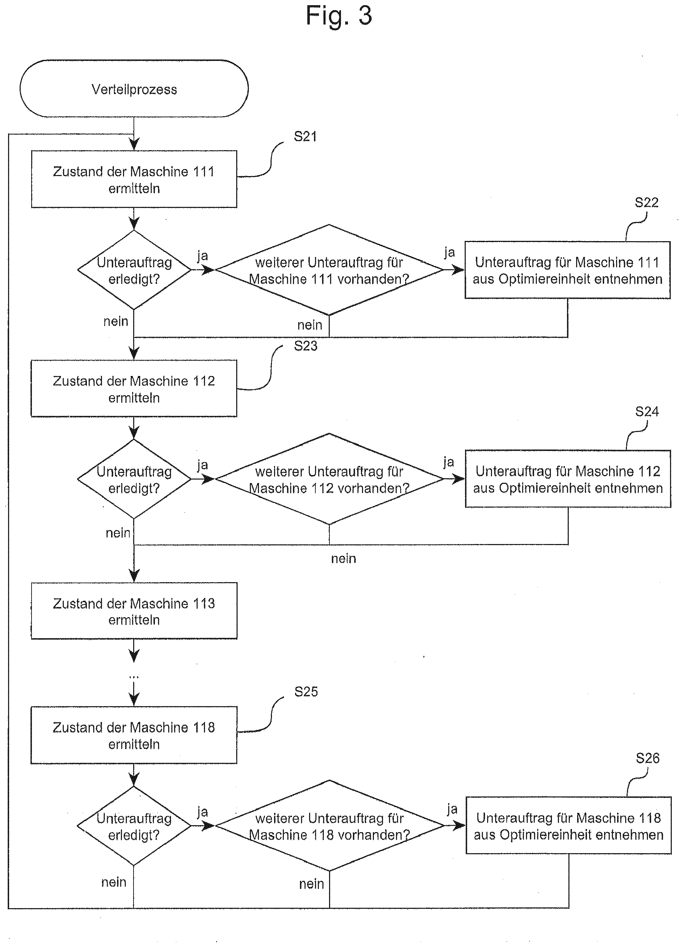

Unter Bezugnahme auf Fig. 3 wird ein erfindungsgemäßer Verteileinheitsprozess beschrieben.

In einem Schritt S21 wird durch die Verteileinheit 130 der Zustand der Schneidemaschine 111 ermittelt. Ergibt dies, dass der momentane Unterauftrag, durch die Schneidemaschine 111 abgearbeitet wurde, dann ermittelt die Verteileinheit 120, ob die Optimiereinheit 130 weitere Unteraufträge für die Schneidemaschine 111 in der Warteschlange vorsieht. Ist dies der Fall, entnimmt die Verteileinheit 120 diesen Unterauftrag für die Maschine 111 aus der Optimiereinheit und übergibt den Unterauftrag der Schneidemaschine 111.

Danach, oder wenn festgestellt wird, dass die Schneidemaschine ihren momentanen Unterauftrag noch nicht abgearbeitet hat oder dass die Optimiereinheit keinen weiteren Unterauftrag für die Maschine 111 bevorratet, wird mit Schritt S23 fortgefahren.

In den Schritten S23 - S26 wird der Vorgang für die Schneidemaschine 111 für die weiteren Maschinen 112-118 wiederholt.

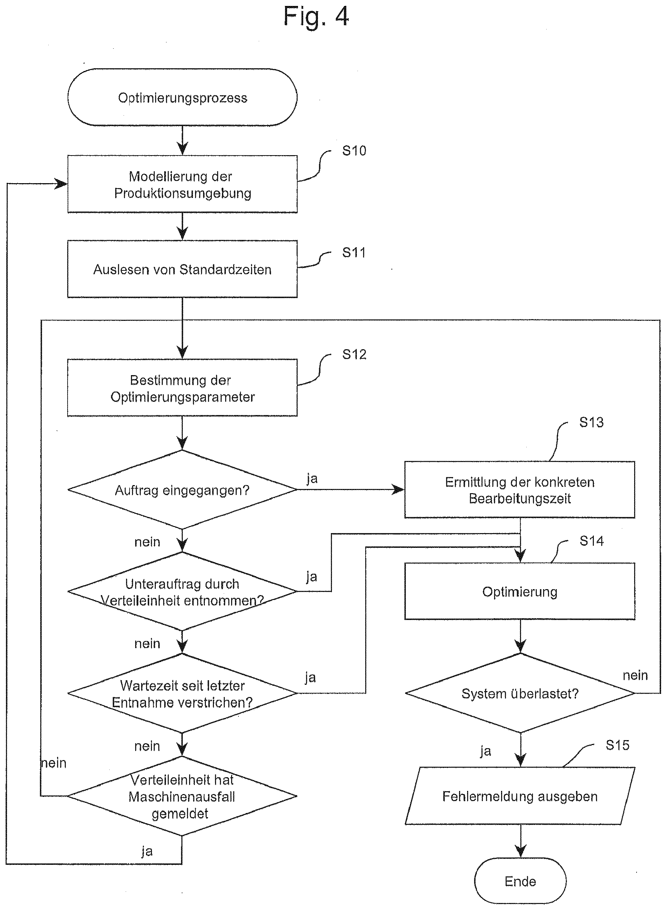

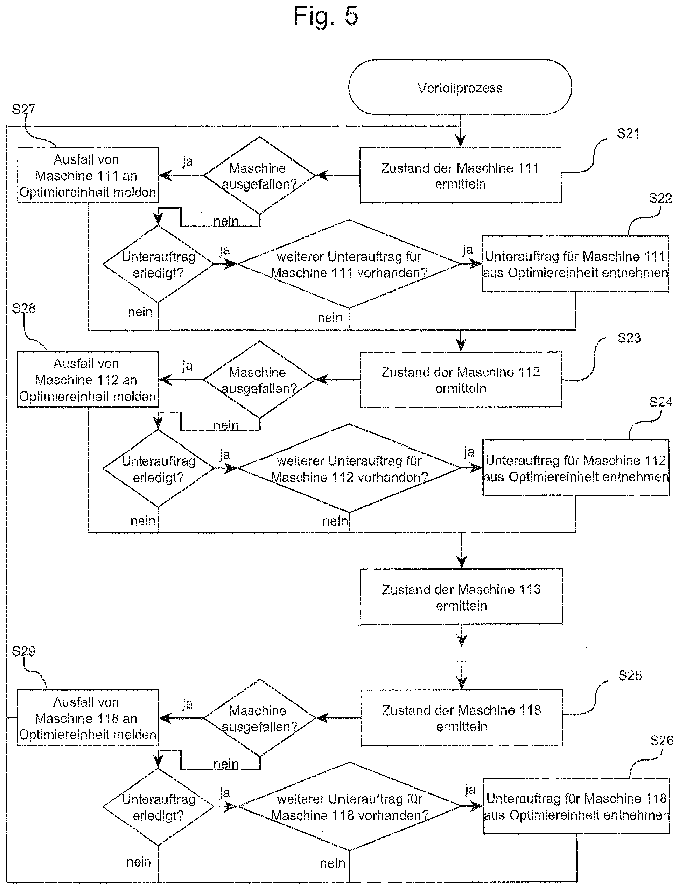

Unter Bezugnahme auf die Figuren 4 und 5 wird eine Abwandlung des ersten Ausführungsbeispiels beschrieben.

Das System des abgewandelten Ausführungsbeispiels entspricht dem System des ersten Ausführungsbeispiels bis auf die folgenden Unterschiede:
Der in Fig. 4 dargestellte abgewandelte Optimiereinheitsprozess stellt dann, wenn festgestellt wird, dass die Wartezeit nach der letzten Entnahme eines Unterauftrags noch nicht verstrichen ist, fest, ob von der Verteileinheit der Störfall einer Maschine gemeldet wurde. Ist dies nicht der Fall, wird wie im ersten Ausführungsbeispiel mit Schritt S12 fortgefahren. Ist dies der Fall, wird zu Schritt S10 zurückgekehrt und die Produktionsumgebung unter Ausschluss der gestörten Maschine neu modelliert.

Der in Fig. 5 dargestellte abgewandelte Verteileinheitprozess stellt nach der Zustandsermittlung der Maschine 111 in S21 fest, ob ein Störfall der Maschine vorliegt. Ist dem so, wird in Schritt S27 der Ausfall der Maschine 111 an die Optimiereinheit 130 übermittelt und dann mit Schritt S23 fortgefahren. Ist dem nicht so, wird wie im ersten Ausführungsbeispiel fortgefahren.

Entsprechende Abwandlungen des Verteileinheitsprozesses gibt es für die Zustandsermittlung der übrigen Maschinen 112-118.

Durch die Zweiteilung der Produktionsplanung in eine Verteilfunktion, die in einer Zeitlich recht engmaschigen Überwachung den tatsächlichen Zustand der Produktionsumgebung erfasst und je nach tatsächlicher Verfügbarkeit Unteraufträge für eine Maschine entnimmt und der Maschine zuweist und in eine Optimierfunktion, die lediglich zu relevanten Zeitpunkten, dann aber automatisch eine neue Optimierung der Produktionsplanung vornimmt, kann ein System realisiert werden, das zu jedem Zeitpunkt einen nach bestimmten Kriterien optimalen oder nahezu optimalen Produktionsplan modelliert. Dieses System ist dazu in der Lage, flexibel auf neue, zeitkritische Aufträge zu reagieren oder den Ausfall einer Maschine automatisch zu kompensieren.

Die gezeigten und beschriebenen Ausführungsformen sind nicht als abschließende Aufzählung zu verstehen, sondern haben vielmehr beispielhaften Charakter für die Schilderung der Erfindung. Für den Fachmann ist offensichtlich, dass innerhalb des durch die Ansprüche definierten Rahmens weitere Ausführungsformen denkbar sind. So ist im Ausführungsbeispiel das Modell der Produktionsumgebung in der Optimiereinheit als deterministischer endlicher Automat ausgelegt. Es ist aber auch möglich, das Modell der Produktionsumgebung in anderer Form darzustellen, beispielsweise als nicht-deterministischer endlicher Automat oder als künstliches neuronales Netz.

Die Junktoren "und", "oder" und "entweder ... oder" werden in der Bedeutung verwendet, die an die logische Konjunktion, die logische Adjunktion (oft "und/oder") bzw. die logische Kontravalenz angelehnt sind. Eine Auflistung von Verfahrensschritten dient lediglich der Darstellung einer Menge von Verfahrensschritten und impliziert keine Reihenfolge der Verfahrensschritte in der Reihenfolge der Auflistung, es sei denn, eine Reihenfolge ist explizit angegeben.

## Patentansprüche

1. Produktionsoptimierungssystem, das aufweist:
eine Produktionsumgebung (110) mit mindestens einer ersten Maschine (111) und einer zweiten Maschine (112),
eine Verteileinheit (120), die eingerichtet ist, mit der ersten Maschine (111) und der zweiten Maschine (112) über ein Kommunikationsnetz (121) verbunden zu sein und deren Maschinenzustand zu ermitteln,
und eine Optimiereinheit (130), die eingerichtet ist, einen Produktionsplan zu erstellen, in dem mindestens ein Auftrag zur Herstellung eines Produktes in maschinenspezifische Unteraufträge für die erste Maschine (111) oder die zweite Maschine (112) aufgeteilt und für die erste Maschine (111) oder die zweite Maschine (112) mit einer Reihenfolge vorgesehen werden,
**dadurch gekennzeichnet, dass** die Verteileinheit (120) eingerichtet ist, unter Berücksichtigung des jeweiligen Maschinenzustands den nächsten anstehenden Unterauftrag für die erste Maschine (111) oder die zweite Maschine (112) von der Optimiereinheit (130) zu ermitteln, aus der Produktionsplanung zu entfernen und der jeweiligen Maschine zuzuweisen, wobei die Optimiereinheit (130) eingerichtet ist, den Produktionsplan nach jeder Entnahme eines Unterauftrags durch die Verteileinheit (120) oder nachdem nach der letzten Entnahme eines Unterauftrags eine vorbestimmte Zeitspanne abgelaufen ist, neu zu ermitteln.

2. Das Produktionsoptimierungssystem nach dem vorhergehenden Anspruch, wobei
die Verteileinheit (120) eingerichtet ist den Maschinenzustand, nämlich die Betriebsbereitschaft oder den Fertigstellungsgrad des derzeitig bearbeiteten Unterauftrags der ersten Maschine (111) oder der zweiten Maschine (112) zu ermitteln und
den Maschinenzustand bei der Zuweisung von Unteraufträgen so zu berücksichtigen, dass ein Unterauftrag der Produktionsplanung nur dann entnommen und der ersten Maschine (111) oder der zweiten Maschine (112) zugewiesen wird, wenn die jeweilige Maschine ihren aktuellen Unterauftrag vollendet oder nahezu vollendet hat und Betriebsbereit ist.

3. Das Produktionsoptimierungssystem nach einem der vorhergehenden Ansprüche, wobei die Optimiereinheit (130) dazu eingerichtet ist,
ein Abbild der Produktionsumgebung (110) für eine Produktplanung mathematisch zu modellieren,
mindestens einen Optimierungsparameter zu bestimmen,
mindestens einen Produktionsauftrag als Produktionsplan so in Unteraufträge zu unterteilen und für die erste Maschine (111) oder zweite Maschine (112) vorzusehen, dass der Produktionsplan nach dem mindestens einen Optimierungsparameter optimal oder nahezu optimal ist.

4. Das Produktionsoptimierungssystem nach Anspruch 3, wobei der Optimierungsparameter die Minimierung des Rüstaufwands oder Be-/Entladeaufwands, die Maximierung der Materialnutzung, die Minimierung der Maschinenlaufzeit, die Minimierung der Durchlaufzeit eines Produkts oder die Minimierung der Abarbeitungsdauer des Gesamtauftrags ist.

5. Das Produktionsoptimierungssystem nach einem der vorhergehenden Ansprüche, wobei die Optimiereinheit (130) dazu eingerichtet ist, die Betriebsumgebung als endlichen Automaten, insbesondere deterministischen endlichen Automaten oder künstliches neuronales Netz zu modellieren.

6. Das Produktionsoptimierungssystem nach Anspruch 3, wobei die Optimiereinheit (130) eingerichtet ist, den Produktionsplan nach jeder Entnahme eines Unterauftrags durch die Verteileinheit (120) oder nachdem nach der letzten Entnahme eines Unterauftrags eine vorbestimmte Zeitspanne abgelaufen ist, nach dem Optimierungsparameter zu optimieren.

7. Das Produktionsoptimierungssystem nach einem der vorhergehenden Ansprüche, wobei die Optimierungseinheit (130) eingerichtet ist, dann, wenn kein Produktionsplan erstellt werden kann, bei dem der mindestens eine Auftrag zur Herstellung eines Produktes innerhalb einer vorgegebenen Zeitspanne hergestellt wird, einen Bediener des Systems darüber in Kenntnis zu setzen.

8. Das Produktionsoptimierungssystem nach einem der vorhergehenden Ansprüche, wobei
die Verteileinheit (110) eingerichtet ist, eine Betriebsstörung der ersten Maschine (111) oder der zweiten Maschine (112) zu erfassen und an die Optimiereinheit zu übermitteln, und
die Optimiereinheit eingerichtet ist, bei Empfang der Benachrichtigung über die Betriebsstörung, das Abbild der Betriebsumgebung unter Ausschluss der betriebsgestörten Maschine neu zu modellieren.

9. Verfahren zur Produktionsoptimierung, umfassend ein Optimierverfahren ausgeführt durch eine Optimiereinheit (130), das die Schritte aufweist:
Modellieren einer Produktionsumgebung mit mindestens einer Maschine,
Empfangen mindestens eines Auftrags zur Herstellung eines Produkts
Erstellen von Unteraufträgen aus dem einen Auftrag als Arbeitsschritte für die mindestens eine Maschine,
Zuweisen der Unteraufträge an die mindestens eine Maschine als Produktionsplan nach Empfangen eines Auftrags oder nach Entnahme eines Unterauftrags durch eine Verteileinheit (120) oder nach Ablauf einer vorbestimmten Zeitspanne nach der letzten Entnahme eines Unterauftrags durch die Verteileinheit (120),
wobei das Verfahren zu Produktionsoptimierung weiterhin ein Verteilverfahren, ausgeführt durch eine Verteileinheit (120) umfasst, das die Schritte aufweist:
Ermitteln des Zustandes mindestens einer Maschine (111) aus einer Produktionsumgebung (110),
Ermitteln, ob die Produktionsplanung aus dem Optimierverfahren der Optimiereinheit (130) einen weiteren Unterauftrag für die Maschine (111) vorsieht, **gekennzeichnet durch die Schritte**
Entnehmen des Unterauftrags aus der Produktionsplanung der Optimiereinheit (130) unter Berücksichtigung des ermittelten Zustands der Maschine (111), wenn die Produktionsplanung einen weiteren Unterauftrag für die Maschine (111) vorsieht,
neu Ermitteln des Produktionsplans nach jeder Entnahme eines Unterauftrags durch das Verteilverfahren oder nachdem nach der letzten Entnahme eines Unterauftrags eine vorbestimmte Zeitspanne abgelaufen ist.

10. Das Verfahren zur Produktionsoptimierung nach dem vorhergehenden Anspruch, wobei das Verfahren ferner die Schritte aufweist:
Bestimmung von Optimierungsparametern,
Optimierung des Produktionsplans nach den Optimierungsparametern.

11. Das Verfahren zur Produktionsoptimierung nach einem der vorhergehenden Ansprüche 9 und 10, wobei das Verfahren ferner die Schritte aufweist:
Ermitteln von Standarddauern für Unteraufträge,
Ermitteln von unterauftragsindividualisierten Dauern unter Berücksichtigung der Konstruktion des Werkstücks.

12. Das Verfahren zur Produktionsoptimierung nach einem der vorhergehenden Ansprüche 9-11, wobei der Schritt Modellieren einer Produktionsumgebung mit mindestens einer Maschine diese als endlicher Automat, insbesondere deterministischer endlicher Automat oder künstliches neuronales Netz modelliert.

13. Das Verfahren zur Produktionsoptimierung nach einem der vorhergehenden Ansprüche 9-12, das ferner den Schritt aufweist:
Empfangen der Benachrichtigung über eine Störung der mindestens einen Maschine von der Verteileinheit (130),
Erneutes Ausführen des Modellierens einer Produktionsumgebung unter Ausschluss der gestörten Maschine.

14. Das Verfahren zur Produktionsoptimierung nach dem vorhergehenden Ansprüche 9-13, das ferner den Schritt aufweist:
Ermitteln des Betriebsbereitschaftszustands der Maschine (111),
Übermitteln des Betriebsbereitschaftszustands der Maschine (111) an die Optimiereinheit (130) bei fehlender Betriebsbereitschaft.

## Claims

1. A production optimization system comprising:
a production environment (110) with at least a first machine (111) and a second machine (112),
a distribution unit (120) configured to be connected to the first machine (111) and the second machine (112) via a communication network (121) and to determine their machine status,
and an optimizing unit (130) which is configured to create a production plan in which at least one order for manufacturing a product is divided into machine-specific sub-orders for the first machine (111) or the second machine (112) and is provided for the first machine (111) or the second machine (112) with a sequence,
**characterized in that** the distribution unit (120) is configured to determine the next pending sub-order for the first machine (111) or the second machine (112) by the optimizing unit (130), to remove it from the production plan and to assign it to the respective machine, taking into account the respective machine status, wherein the optimizing unit (130) is configured to redetermine the production plan after each removal of a sub-order by the distribution unit (120) or after a predetermined period of time has elapsed after the last removal of a sub-order.

2. The production optimization system according to the preceding claim, wherein
the distribution unit (120) is configured to determine the machine status, namely the operational readiness or the degree of completion of the currently processed sub-order of the first machine (111) or the second machine (112) and
take the machine status into account when assigning sub-orders so that a sub-order is only removed from production planning and assigned to the first machine (111) or the second machine (112), if the respective machine has completed or almost completed its current sub-order and is ready for operation.

3. The production optimization system according to any one of the preceding claims, wherein the optimization unit (130) is configured to
mathematically model an image of the production environment (110) for product planning,
determine at least one optimization parameter,
divide at least one production order as a production plan into sub-orders and to provide this for the first machine (111) or second machine (112) in such a way that the production plan is optimal or almost optimal according to the at least one optimization parameter.

4. The production optimization system according to claim 3, wherein the optimization parameter is the minimization of the setup effort or loading/unloading effort, the maximization of the material utilization, the minimization of the machine run time, the minimization of the throughput time of a product or the minimization of the processing time for the overall order.

5. The production optimization system according to any one of the preceding claims, wherein the optimization unit (130) is configured to model the operating environment as a finite automaton, in particular a deterministic finite automaton or an artificial neural network.

6. The production optimization system according to claim 3, wherein the optimization unit (130) is configured to optimize the production plan according to the optimization parameter after each removal of a sub-order by the distribution unit (120) or after a predetermined period of time has elapsed after the last removal of a sub-order.

7. The production optimization system according to any one of the preceding claims, wherein the optimization unit (130) is configured, if no production plan can be created in which the at least one order for manufacturing a product is produced within a predetermined period of time, to notify an operator of the system thereof.

8. The production optimization system according to one of the preceding claims, wherein
the distribution unit (110) is configured to detect an operating fault of the first machine (111) or the second machine (112) and to communicate it to the optimization unit, and
the optimization unit is configured to remodel the image of the operating environment, excluding the machine with the operating fault when the notification of the operating fault is received.

9. A production optimization method comprising an optimization method performed by an optimization unit (130), comprising the steps:
modeling a production environment with at least one machine,
receiving at least one order for the manufacture of a product,
creating sub-orders from the one order as work steps for at least one machine,
assigning the sub-orders to the at least one machine as a production plan after receipt of an order or after removal of a sub-order by a distribution unit (120) or after expiry of a predetermined period of time after the last removal of a sub-order by the distribution unit (120),
wherein the production optimization method further comprises a distribution method performed by a distribution unit (120), comprising the steps:
determining the state of at least one machine (111) from a production environment (110),
determining whether the production planning from the optimization method of the optimization unit (130) provides a further sub-order for the machine (111), **characterized by the steps**
removing the sub-order from the production planning of the optimization unit (130), taking into account the determined state of the machine (111), if the production planning provides a further sub-order for the machine (111),
re-determining the production plan after each removal of a sub-order by the distribution method or after a predetermined period of time has elapsed after the last removal of a sub-order.

10. The production optimization method according to the preceding claim, wherein the method further comprises the steps:
determining optimization parameters,
optimizing the production plan according to the optimization parameters.

11. The production optimization method according to one of the preceding claims 9 and 10, wherein the method further comprises the steps:
determining standard durations for sub-orders,
determining durations individualized by sub-order, taking into account the design of the workpiece.

12. The production optimization method according to any one of the preceding claims 9-11, wherein the step of modeling a production environment with at least one machine models this as a finite automaton, in particular a deterministic finite automaton or an artificial neural network.

13. The production optimization method according to any one of the preceding claims 9-12, further comprising the step:
receiving the notification of a malfunction of the at least one machine from the distribution unit (130),
renewed execution of the modeling of a production environment excluding the faulty machine.

14. The production optimization method according to the preceding claims 9-13, further comprising the step:
determining the operational readiness status of the machine (111),
communicating the operational readiness status of the machine (111) to the optimization unit (130) if it is not ready for operation.

## Revendications

1. Système d'optimisation de la production, comprenant :
un environnement de production (110) avec au moins une première machine (111) et une deuxième machine (112),
une unité de distribution (120) qui est configurée pour être connectée à la première machine (111) et à la deuxième machine (112) via un réseau de communication (121) et pour déterminer leur état de machine,
et une unité d'optimisation (130) qui est configurée pour créer un plan de production dans lequel au moins une commande de fabrication d'un produit est divisé en sous-commandes spécifiques à la machine pour la première machine (111) ou la deuxième machine (112) et est pourvue d'une séquence pour la première machine (111) ou la deuxième machine (112),
**caractérisé en ce que** l'unité de distribution (120) est configurée pour déterminer, via l'unité d'optimisation (130), la prochaine sous-commande en attente pour la première machine (111) ou la deuxième machine (112), en tenant compte de l'état de machine respectif, pour la supprimer de la planification de la production et pour assigner la machine respective, dans lequel l'unité d'optimisation (130) est configurée pour redéterminer le plan de production après chaque retrait d'une sous-commande par l'unité de distribution (120) ou après qu'un délai prédéterminé s'est écoulé après le dernier retrait d'une sous-commande.

2. Système d'optimisation de la production selon la revendication précédente, dans lequel
l'unité de distribution (120) est configurée pour déterminer l'état de la machine, à savoir l'état opérationnel ou le degré d'achèvement de la sous-commande en cours de traitement de la première machine (111) ou de la deuxième machine (112), et
pour prendre en compte l'état de la machine lors de l'assignation de sous-commandes, de telle sorte qu'une sous-commande ne soit retirée de la planification de la production et attribuée à la première machine (111) ou à la deuxième machine (112) que lorsque la machine correspondante a terminé ou presque terminé sa sous-commande actuelle et est opérationnelle.

3. Système d'optimisation de la production selon l'une des revendications précédentes, dans lequel l'unité d'optimisation (130) est configurée pour
modéliser mathématiquement une image de l'environnement de production (110) pour la planification de la production,
déterminer au moins un paramètre d'optimisation,
diviser au moins une commande de production en sous-commandes en tant que plan de production et planifier pour la première machine (111) ou la deuxième machine (112) de manière à ce que le plan de production soit optimal ou presque optimal, en fonction dudit au moins un paramètre d'optimisation.

4. Système d'optimisation de la production selon la revendication 3, dans lequel le paramètre d'optimisation consiste à minimiser le temps de préparation ou le temps de chargement/déchargement, à maximiser l'utilisation des matériaux, à minimiser le temps de fonctionnement de la machine, à minimiser le temps de fabrication d'un produit, ou à minimiser le temps de traitement de l'ensemble de la commande.

5. Système d'optimisation de la production selon l'une des revendications précédentes, dans lequel l'unité d'optimisation (130) est configurée pour modéliser l'environnement d'exploitation comme un automate fini, en particulier un automate fini déterministe ou un réseau de neurones artificiels.

6. Système d'optimisation de la production selon la revendication 3, dans lequel l'unité d'optimisation (130) est configurée pour optimiser le plan de production selon le paramètre d'optimisation après chaque retrait d'une sous-commande par l'unité de distribution (120) ou après qu'un délai prédéterminé s'est écoulé après le dernier retrait d'une sous-commande.

7. Système d'optimisation de la production selon l'une des revendications précédentes, dans lequel l'unité d'optimisation (130) est configurée pour informer un opérateur du système si aucun plan de production ne peut pas être créé dans lequel ladite au moins une commande de fabrication d'un produit est produite dans un délai prédéterm iné.

8. Système d'optimisation de la production selon l'une des revendications précédentes, dans lequel
l'unité de distribution (110) est configurée pour détecter un dysfonctionnement de la première machine (111) ou de la deuxième machine (112) et le transmettre à l'unité d'optimisation, et
l'unité d'optimisation est configurée pour remodéliser l'image de l'environnement d'exploitation à l'exclusion de la machine en dysfonctionnement dès la réception d'une notification du dysfonctionnement.

9. Procédé d'optimisation de la production, comprenant un procédé d'optimisation mis en oeuvre par une unité d'optimisation (130) qui comporte les étapes suivantes :
modélisation d'un environnement de production avec au moins une machine,
réception d'au moins une commande pour fabriquer un produit,
création de sous-commandes à partir d'une commande sous forme d'étapes de travail pour ladite au moins une machine,
assignation des sous-commandes à ladite au moins une machine en tant que plan de production après la réception d'une commande, ou après le retrait d'une sous-commande par une unité de distribution (120), ou après qu'un délai prédéterminé s'est écoulé après le dernier retrait d'une sous-commande par l'unité de distribution (120),
dans lequel le procédé d'optimisation de la production comprend en outre un procédé de distribution, mis en oeuvre par une unité de distribution (120), qui comporte les étapes suivantes :
détermination de l'état d'au moins une machine (111) à partir d'un environnement de production (110),
détermination du fait que la planification de la production issue du processus d'optimisation de l'unité d'optimisation (130) prévoit une autre sous-commande pour la machine (111),
**caractérisé par les étapes suivantes**
retrait de la sous-commande de la planification de la production de l'unité d'optimisation (130), en tenant compte de l'état déterminé de la machine (111), si la planification de la production prévoit une autre sous-commande pour la machine (111),
redétermination du plan de production après chaque retrait d'une sous-commande par le processus de distribution ou après qu'un délai prédéterminé s'est écoulé après le dernier retrait d'une sous-commande.

10. Procédé d'optimisation de la production selon la revendication précédente, dans lequel le procédé comporte en outre les étapes suivantes :
détermination de paramètres d'optimisation,
optimisation du plan de production selon les paramètres d'optimisation.

11. Procédé d'optimisation de la production selon l'une des revendications précédentes 9 et 10, dans lequel le procédé comporte en outre les étapes suivantes :
détermination de durées standards pour les sous-commandes,
détermination de durées spécifiques aux sous-commandes en tenant compte de la construction de la pièce.

12. Procédé d'optimisation de la production selon l'une des revendications précédentes 9 à 11, dans lequel l'étape de modélisation d'un environnement de production avec au moins une machine le modélise comme un automate fini, en particulier un automate fini déterministe ou un réseau de neurones artificiels.

13. Procédé d'optimisation de la production selon l'une des revendications précédentes 9 à 12, comportant en outre les étapes suivantes :
réception d'une notification par l'unité de distribution (130) d'un dysfonctionnement de ladite au moins une machine,
remise en oeuvre de la modélisation d'un environnement de production en excluant la machine en dysfonctionnement.

14. Procédé d'optimisation de la production selon les revendications précédentes 9 à 13, comportant en outre les étapes suivantes :
détermination de l'état opérationnel de la machine (111),
transmission de l'état opérationnel de la machine (111) à l'unité d'optimisation (130) si elle n'est pas opérationnelle.
